# FASCICULE DE BREVET EUROPEEN

(11) **EP 1 334 286 B1**
(45) Date de publication et mention de la délivrance du brevet: **25.01.2006**
(21) Numéro de dépôt: 01996695.1
(22) Date de dépôt: 16.11.2001
(51) Int. Cl.: F16C 39/06

(54) **MACHINE TOURNANTE A BUTEE AXIALE MAGNETIQUE INTEGRANT UNE GENERATRICE DE COURANT**
ROTIERENDE MASCHINE MIT AXIALEM MAGNETISCHEM ANSCHLAG, DER EINEN STROMGENERATOR BEINHALTET
ROTARY MACHINE WITH AXIAL STOP INCORPORATING A CURRENT GENERATOR

(30) Priorité: 17.11.2000 FR 0014846
(43) Date de publication de la demande: 13.08.2003
(73) Titulaire: SOCIETE DE MECANIQUE MAGNETIQUE, F-27950 Saint-Marcel (FR)
(72) Inventeur: BRUNET, Maurice, F-27950 SAINTE COLOMBE PRES VERNON (FR); SCHROEDER, Ulrich, F-76130 MONT SAINT AIGNAN (FR); TREMAUDANT, Yann, F-78300 Poissy (FR)
(74) Mandataire: Thévenet, Jean-Bruno
(86) Numéro de dépôt international: PCT/FR2001/003598
(87) Numéro de publication internationale: WO 2002/040884

(56) Documents cités:
- US-A- 5 310 311
- US-A- 5 525 848
- US-A- 5 572 079

## Description

La présente invention concerne une machine tournante, par exemple une turbopompe, comportant un arbre rotatif supporté par des paliers magnétiques actifs radiaux. Plus particulièrement, l'invention se rapporte à l'alimentation de secours en énergie électrique des paliers magnétiques radiaux et axiaux notamment pour des appareils destinés à fonctionner dans des atmosphères explosibles.

### Art antérieur

L'utilisation de machines tournantes à paliers magnétiques est de plus en plus répandue voir, par exemple, le document US-A-5 525 898. Les paliers magnétiques actifs utilisés dans ce type de machines font appel à des dispositifs d'électro-aimants dont le fonctionnement nécessite du courant électrique et donc une alimentation électrique.

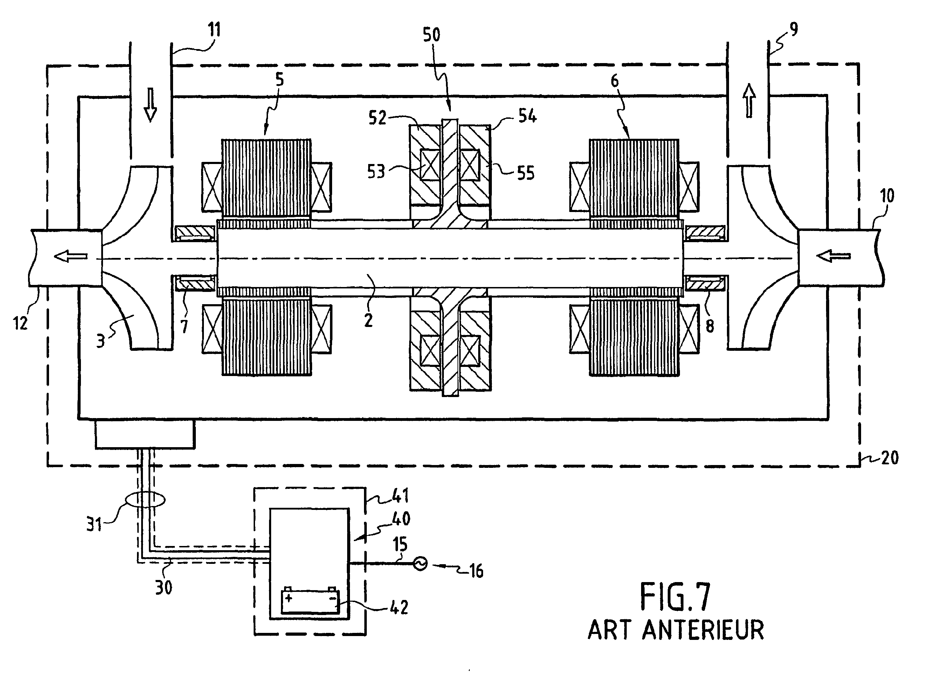

La figure 7 représente un exemple de turbo expandeur. La machine comprend un arbre rotatif 2 qui est entouré par deux paliers magnétiques radiaux 5 et 6 placés au voisinage des deux extrémités de l'arbre et d'une butée axiale à double effet. Une première et une seconde roues 3 et 4 sont fixées respectivement à l'une et l'autre extrémités de l'arbre 2. La première roue 3 située à gauche sur la figure reçoit, via une voie d'entrée 11, un fluide comprimé qui va entraîner la rotation de l'arbre. Cette partie du compresseur représente donc la turbine qui en fonctionnement transmet le mouvement de rotation à la seconde roue 4 destinée à comprimer un fluide circulant d'une voie d'entrée 10 à une voie de sortie 9. En rotation, l'arbre 2 est avantageusement maintenu en lévitation par les deux paliers magnétiques radiaux 5, 6 qui sont pilotés en courant. La structure, le fonctionnement et les avantages des paliers magnétiques actifs tels qu'illustrés sur la figure sont bien connus.

Les paliers magnétiques radiaux sont pilotés en courant par un dispositif d'alimentation disposé dans une armoire de contrôle 40 qui elle-même est principalement alimentée par un secteur d'alimentation électrique 16. Le compresseur centrifuge comprend en outre des paliers auxiliaires passifs 7 et 8, tels que des roulements à billes ou bagues lisses, destinés à réceptionner l'arbre rotatif 2 en cas de défaillance des paliers magnétiques. Cependant, l'arbre en rotation n'est autorisé à atterrir sur les paliers auxiliaires qu'à une certaine vitesse, suffisamment réduite, pour éviter les risques d'endommagement ou de destruction de l'arbre et des paliers. A cet effet, l'armoire de contrôle 40 principalement alimentée par le secteur comprend aussi des batteries de secours 42 destinées à relayer l'alimentation secteur 16 des paliers en cas de défaillance jusqu'à ce qu'une vitesse suffisamment réduite pour autoriser la délévitation de l'arbre sur les paliers auxiliaires soit atteinte.

Dans le cas où le compresseur est destiné à fonctionner dans une zone à atmosphère explosible 20 comme illustré sur la figure 7, l'armoire de contrôle 40 est située à distance de la machine dans une zone protégée non explosible 41. Dans ce type de configuration, seule la machine est placée dans la zone à atmosphère explosible 20, celle-ci étant traitée antidéflagrante. La machine est reliée à l'armoire distante par des liaisons 30 protégées entre la machine et l'armoire par des gaines étanches 31.

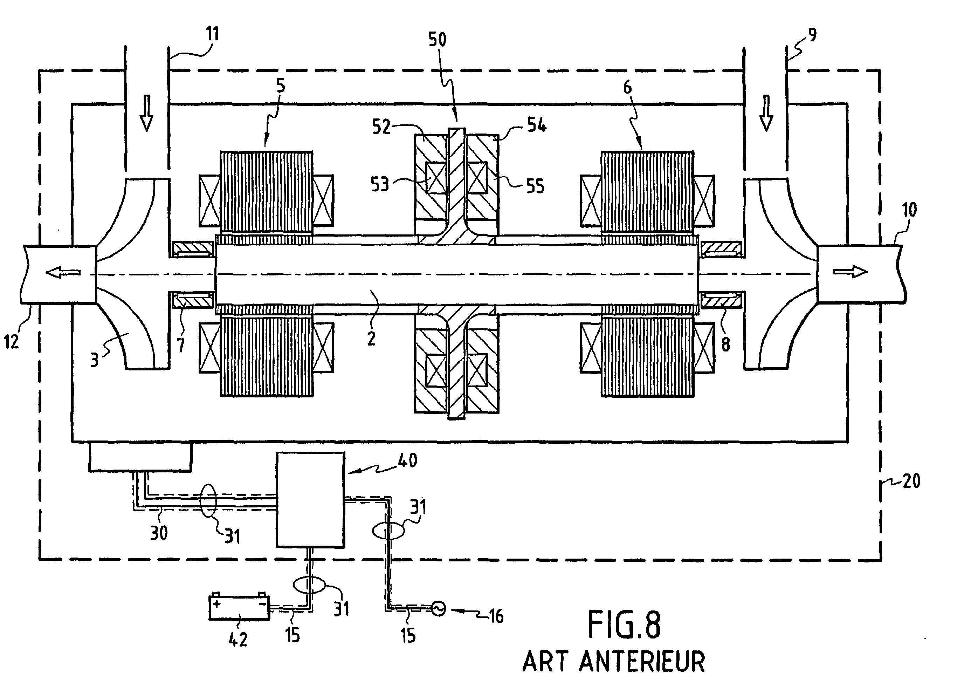

Pour des raisons de coût ou de mobilité des équipements, il n'est pas toujours possible d'avoir les armoires de contrôle à distance dans des environnements protégés. Dans ces cas, comme représenté sur la figure 8, l'armoire de contrôle 40 de type antidéflagrant peut être située à proximité de la machine dans la zone à atmosphère explosible 20 mais ne peut disposer de batteries à l'intérieur. En effet, la désactivation totale des batteries n'étant pas possible, condition indispensable pour des zones explosibles, celles-ci ne peuvent se trouver dans l'environnement à risque. Ainsi, les batteries 42 sont toujours situées à l'extérieur de la zone 20. Les connexions entre l'armoire de contrôle 40, d'une part, et les batteries 42 ainsi que la source d'alimentation secteur 16, d'autre part, sont alors assurées par des liaisons 15 protégées par des gaines étanches 31 du type de celles utilisées entre l'armoire et la machine dans la figure 7. Par conséquent, une telle configuration du système machine/sources d'alimentation ne permet pas de disposer d'un système totalement indépendant dans des zones à atmosphère explosibles.

Par ailleurs, la durée de vie des batteries étant limitée et leur maintenance étant problématique, il est toujours avantageux de s'affranchir de leur utilisation avec ce type de machines.

Il est donc nécessaire, pour remédier à des pannes de secteur éventuelles, et donc éviter la perte de contrôle des paliers magnétiques, de disposer d'une autre protection à l'intérieur même de la machine, elle-même traitée antidéflagrante.

Une solution connue de l'art antérieur concerne les machines tournantes qui comprennent un moteur d'entraînement électrique. Avec ce type de machine, lors de la perte du secteur, le moteur peut alors travailler en générateur pour auto-alimenter les paliers pendant le ralentissement de la machine jusqu'à une vitesse acceptable qui autorise le contact de l'arbre avec les paliers auxiliaires.

Cependant, cette solution ne peut être envisagée que pour des machines tournantes motorisées alors qu'il existe aujourd'hui un grand nombre de petites turbomachines à paliers magnétiques vis-à-vis desquelles les aspects coût et encombrement ne permettent pas d'avoir un alternateur conventionnel embarqué, qui, sur ce type de machine à petites dimensions, en modifierait les performances.

### Objet et description succincte de l'invention

La présente invention vise à remédier aux inconvénients précités et à réaliser une machine tournante comprenant une alimentation de secours intégrée de faible encombrement qui permet le pilotage des paliers magnétiques même lorsque la machine ne comprend pas de motorisation interne.

Ces buts sont atteints grâce à une machine tournante comportant un arbre rotatif supporté par des premier et deuxième paliers magnétiques radiaux pilotés en courant par un dispositif de commande, l'arbre rotatif étant équipé d'un dispositif de butée axiale comprenant un premier rotor, formé d'un disque solidaire de l'arbre rotatif et interposé entre des premier et second stators formés annulairement autour de l'arbre rotatif et comprenant chacun au moins une bobine annulaire pilotée en courant par un système d'asservissement de position axiale de l'arbre rotatif, caractérisée en ce qu'au moins un des deux stators du dispositif de butée axiale comprend en outre un élément induit et en ce que le disque solidaire de l'arbre rotatif comprend un dispositif inducteur de manière à créer, lors de la rotation de l'arbre, un courant d'excitation dans l'élément induit afin de fournir de l'énergie aux paliers magnétiques radiaux.

Ainsi, sans encombrer la structure de la machine, des moyens de production de courant électrique sont avantageusement montés dans le dispositif de butée axiale qui devient alors, en outre, un générateur de courant autonome pour l'alimentation des paliers magnétiques.

De préférence, les aimants permanents sont disposés uniformément dans le disque suivant un cercle de diamètre supérieur, égal ou inférieur à celui du dispositif induit.

Selon un mode de réalisation avantageux, les aimants permanents sont disposés uniformément dans le disque en une première série suivant un cercle de diamètre inférieur à celui du dispositif induit et en une seconde série suivant un second cercle de diamètre supérieur à celui du dispositif induit de sorte que l'espace définit entre la première et la seconde série d'aimants forme un logement pour le dispositif induit.

Le dispositif induit peut comprendre le dispositif induit comprend au moins un bobinage toroïdal enroulé sur un noyau fixé sur le stator du dispositif de butée axiale.

Selon un autre mode de réalisation, le dispositif induit comprend au moins un bobinage plan sur un circuit imprimé disposé sur une structure annulaire fixée sur le stator du dispositif de butée axiale.

Dans ce cas, de préférence, le bobinage plan est disposé sur la face de la structure annulaire qui est en regard du pôle le plus proche des aimants permanents. Le dispositif de commande des paliers magnétiques radiaux est relié au dispositif induit pour recevoir le courant généré dans celui-ci.

Le dispositif de commande peut être fixé sur la machine et comprend alors un habillage antidéflagrant.

### Brève description des dessins

D'autres caractéristiques et avantages de l'invention ressortiront de la description suivante de modes particuliers de réalisation de l'invention, donnés à titre d'exemples, en référence aux dessins annexés, sur lesquels:
- la figure 1 est une vue en coupe axiale d'un compresseur centrifuge montrant de façon schématique un dispositif de butée axiale équipé de moyens générateurs de courant selon la présente invention,
- la figure 2 est une vue en demi-coupe axiale d'un premier exemple d'agencement des moyens générateurs de courant dans le dispositif de butée axiale conformément à la présente invention,
- la figure 3 est une vue en coupe axiale suivant la ligne III-III de la figure 2, montrant l'arrangement entre des aimants fixés sur la partie rotor du dispositif de butée axiale et un bobinage toroïdal fixé sur une partie stator du dispositif de butée selon un premier exemple conformément à la présente invention,
- la figure 4 est une vue en demi-coupe axiale d'un deuxième exemple d'agencement des moyens générateurs de courant dans le dispositif de butée axiale conformément à la présente invention,
- la figure 5 est une vue en coupe axiale suivant la ligne V-V de la figure 4, montrant la disposition relative entre des aimants fixés sur la partie rotor du dispositif de butée axiale et un bobinage sur circuit imprimé sur une partie périphérique externe d'un anneau fixé sur un stator du dispositif de butée selon un deuxième exemple conformément à la présente invention,
- la figure 6 est une vue en demi-coupe axiale d'un troisième exemple d'agencement des moyens générateurs de courant dans le dispositif de butée axiale conforme à la présente invention,
- la figure 7 est une vue en coupe axiale d'un compresseur centrifuge et de son dispositif de contrôle selon un premier exemple de l'art antérieur, et
- la figure 8 est une vue en coupe axiale d'un compresseur centrifuge et de son dispositif de contrôle selon un second exemple de l'art antérieur.

### Description détaillée de modes particuliers de réalisation

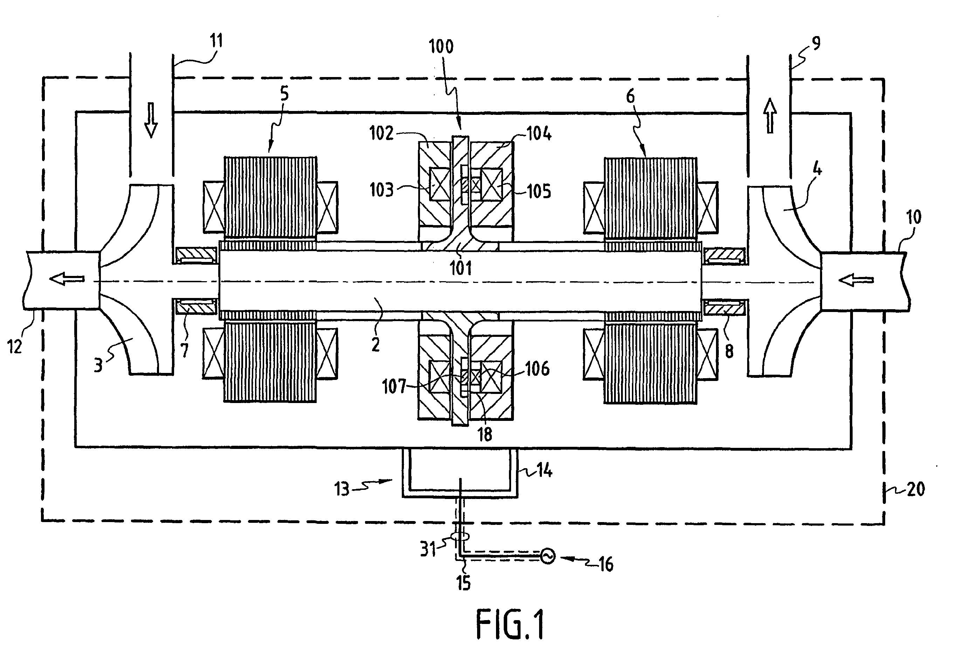

La figure 1 représente un turbo expandeur qui est destiné à fonctionner dans une zone à atmosphère explosible 20 et qui comprend un dispositif de butée axiale 100 équipé de moyens générateurs de courant conformément à l'invention. Le compresseur comprend principalement un arbre rotatif 2 supporté par des premier et second paliers radiaux magnétiques actifs 6 et 7 qui sont pilotés en courant par un dispositif de contrôle 13 situé dans la zone 20 et qui est de préférence intégré à la structure du compresseur. Le dispositif de contrôle 13 peut être placé soit dans un coffret traité antidéflagrant 14 si la machine est destinée à fonctionner dans une zone 20 à atmosphère explosible, soit dans un coffret ou boîte de jonction classique pour des utilisations dans des environnements non sécurisés.

Le dispositif de contrôle 13 est principalement alimenté à partir d'un secteur 16 d'un réseau de distribution électrique dont le point de branchement est situé en dehors de la zone 20. Le dispositif 13 est branché au secteur 16 par un conducteur 15 qui comprend une gaine étanche 31 pour isoler le conducteur 15 de l'atmosphère explosible dans la zone 20. Le dispositif de contrôle 13 alimente alors en énergie électrique les paliers radiaux suivant une intensité de courant proportionnelle à la force de lévitation nécessaire à l'arbre rotatif 2. De façon connue, la position de l'arbre à l'intérieur des paliers radiaux est asservie en permanence par mesure de son déplacement radial et correction en pilotant les paliers en courant.

Dans l'exemple décrit, le compresseur ne comprend pas de motorisation électrique intégrée. L'entraînement en rotation de l'arbre est obtenu par circulation d'un fluide sous pression dans un conduit d'entrée 11 qui va lui-même entraîner une première roue 3 avant d'être éjecté dans un conduit de sortie 12. La roue 3 animée par la circulation du fluide sous pression joue le rôle d'une turbine d'entraînement du compresseur. L'arbre ainsi en rotation va entraîner une seconde roue 4 destinée à pomper un fluide de travail circulant entre un conduit d'entrée 10 et un conduit de sortie 9. Ce type de compresseur fonctionne donc par entraînement de la turbine qui peut être effectué à partir d'une réserve de gaz comprimé ou directement par détente d'un gaz lors d'un processus de séparation de la phase liquide et de la phase vapeur du gaz.

Les machines tournantes non motorisées peuvent comprendre d'autres dispositifs d'entraînement de la pompe. A titre d'exemple, une turbine externe à la machine peut être disposée en dehors de la zone à atmosphère explosible tout en étant reliée à la pompe par une liaison flexible.

Des premier et second paliers auxiliaires 7 et 8 sont disposés autour de chaque extrémité de l'arbre 2. Ces paliers passifs ont notamment pour fonction de recevoir l'arbre 2 en cas de défaillance des paliers magnétiques radiaux. Cependant, l'arbre 2 n'est autorisé à venir au contact des paliers auxiliaires qu'en dessous d'une certaine vitesse de rotation pour éviter d'éventuels dommages. Cette vitesse autorisée est de l'ordre de 1000 tours par minute. Il faut donc pouvoir conserver la lévitation magnétique de l'arbre jusqu'à ce que sa vitesse de rotation ralentisse à la vitesse autorisée même en cas de perte de l'alimentation électrique du secteur 16. On a vu que les solutions de l'art antérieur ne permettaient pas d'obtenir un dispositif de secours qui combine en même temps les aspects de sécurité et d'encombrement pourtant très importants pour ce type de machine tournante.

L'invention propose donc d'utiliser avantageusement le dispositif de butée axiale magnétique très répandu dans les machines tournantes. Le dispositif de butée axiale 100 comprend classiquement un rotor 101 en forme de disque solidaire de l'arbre 2 et interposé entre deux stators 102 et 104 comprenant chacun respectivement une ou plusieurs bobines annulaires 103 et 105. Ces bobines sont pilotées en courant par un système d'asservissement connu qui détecte un déplacement axial de l'arbre à travers un capteur de position afin d'obtenir une réponse en courant proportionnelle au mouvement axial à corriger. Dans les modes de réalisation des dispositifs de butée axiale équipés des moyens générateurs selon l'invention décrits dans la suite du texte, les éléments communs du dispositif de butée sont référencés avec les mêmes dizaines.

Conformément à l'invention, un dispositif inducteur 107 de production d'un champ magnétique est disposé dans le disque 101 alors qu'au voisinage de celui-ci se trouve un dispositif induit 106 fixé sur le stator 104 en regard du disque. Lorsque l'arbre rotatif est en fonction le dispositif inducteur 107 est en rotation au voisinage du dispositif induit 106 fixe créant ainsi une variation de flux magnétique qui va générer un courant électrique d'excitation dans le dispositif induit. Sur la figure 1, le dispositif inducteur est situé dans une ouverture circulaire pratiquée dans la face droite du disque ce qui détermine que le stator 104 doit comprendre le dispositif induit 106. Cependant, le dispositif inducteur pourrait, de façon indifférente, être situé du côté gauche du disque et fonctionner avec un dispositif inducteur inclus dans le stator 102.

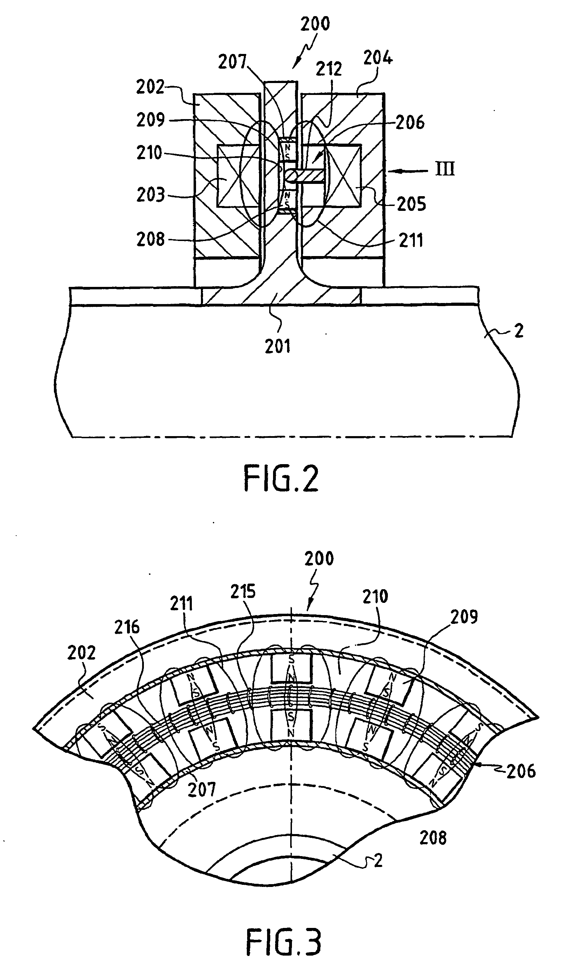

Les figures 2 et 3 présentent un mode de réalisation d'une butée axiale 200 équipée des moyens générateurs de courant selon l'invention. Le disque 201 solidaire de l'arbre comprend une première série d'aimants permanents 208 et une seconde série d'aimants permanents 209 respectivement disposées suivant deux cercles de diamètre différent et concentriques à l'axe du disque 201. Les aimants de chaque série sont disposés de telle sorte que deux aimants respectivement de la première et de la seconde série soient alignés et orientés en polarité suivant une direction radiale du disque 201 pour former une paire de pôles créatrice d'un champ magnétique matérialisé par les lignes 211 autour de chaque paire. La configuration des aimants sur le disque 201 peut.reprendre celle des arrangements possibles connues pour les moteurs plats, ceci en fonction du nombre de paires de pôles souhaité.

Les aimants sont encastrés dans le disque de telle manière qu'ils soient maintenus positivement par le disque vis-à-vis des forces centrifuges.

Ces aimants ne modifient pas le trajet du champ magnétique utilisé pour le fonctionnement de la butée axiale. Des pièces non magnétiques 207 et 208 peuvent être interposées entre les pôles des aimants adjacents et la masse du disque.

La partie circulaire du disque 201 située entre les deux séries d'aimants est évidée pour former une cavité 210 dans laquelle est insérée une partie du dispositif induit 206. L'induit 206 peut être formé, comme représenté sur la figure 3, d'un bobinage toroïdal 215 dont les spires sont enroulées sur un noyau de fer ou de ferrite 216. Dans cette configuration, l'induit 206 est fixé au stator 204 par une pluralité d'organes de fixation 212 interposés entre le noyau 216 et le stator 204. Alternativement, le bobinage peut être réalisé sur un circuit imprimé fixé à une structure annulaire constituée d'un matériau ferreux. Quelle que soit la structure de bobinage utilisé, celui-ci peut être biphasé ou triphasé et le dispositif inducteur peut comprendre un nombre de pôles quelconque.

Le bobinage étant la partie stator des moyens générateurs de courant, un courant ne circule dans le bobinage que si le disque tourne faisant alors défiler les paires de pôles au voisinage du bobinage. Evidemment, ces moyens générateurs de courant ne doivent pas modifier de manière significative les caractéristiques électromagnétiques du dispositif de butée axiale pour ne pas en gêner son fonctionnement. C'est pour cela que l'invention propose d'embarquer sur l'élément rotor du dispositif de butée des aimants permanents dans une partie faisant face à un des éléments stators du dispositif de butée, l'élément stator considéré comprenant un bobinage dans lequel circule un courant seulement lorsque les aimants permanents sont en mouvement.

De plus, puisque les aimants sont implantés circulairement dans le disque, ceux-ci défilent à une vitesse périphérique significative, même pour des vitesses de rotation de l'arbre relativement faibles, ce qui permet d'alimenter les paliers magnétiques avec un courant suffisant pour maintenir la lévitation de l'arbre même à basse vitesse. Dans tous les cas, la vitesse de rotation maximum autorisée pour un contact entre l'arbre et les paliers auxiliaires qui est de l'ordre de 1000 tours par minute est suffisante pour que les moyens générateurs de courant de la butée produisent assez d'énergie pour l'alimentation des paliers radiaux. Lors du démarrage, dès qu'une vitesse de rotation de quelques milliers de tours par minute est atteinte sur les paliers auxiliaires, les moyens générateurs de courant intégrés dans le dispositif butée fournissent suffisamment de puissance pour activer les paliers magnétiques et auto-léviter l'arbre rotatif qui sera maintenu dans cet état de lévitation magnétique tant que l'arbre aura une vitesse suffisante, c'est-à-dire supérieure à environ 1000 tours par minute.

Le courant généré dans le bobinage du dispositif induit 206 est transmis au dispositif de contrôle 13 qui comprend un dispositif électronique (non représenté) ayant notamment un convertisseur DC/DC avec une large fourchette d'entrée assurant ainsi l'alimentation électrique de l'électronique de commande des paliers magnétiques actifs 5, 6 avec une tension constante même à basse vitesse.

Sur le même principe de fonctionnement que celui exposé en relation avec les figures 2 et 3, de nombreuses variantes d'arrangements, soit pour le dispositif induit soit pour le dispositif inducteur, sont tout à fait envisageables sans perdre les avantages mentionnés ci-dessus.

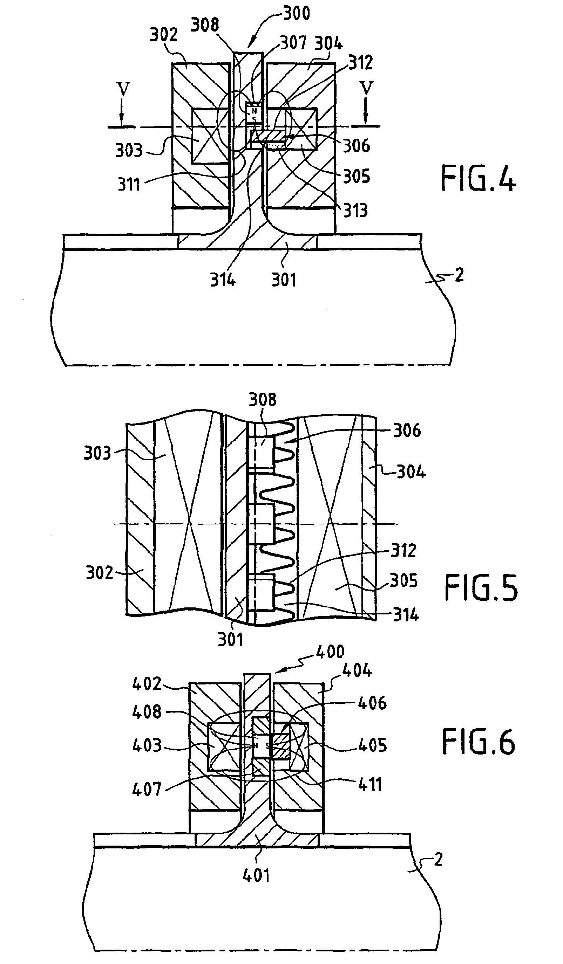

Les figures 4 et 5 montrent des vues d'un exemple de variante possible. Dans cet exemple, le dispositif inducteur ne comprend qu'une seule série d'aimants permanents 308 disposés dans la structure d'un disque 301 appartenant à un dispositif de butée axiale 300 du même type que ceux déjà décrits dans la présente demande. Le dispositif induit 306 peut être constitué d'un bobinage toroïdal du type décrit en relation avec la figure 3 ou bien, comme représenté sur la figure 5, être formé à partir d'une structure annulaire 314 ayant une surface périphérique externe qui comprend un circuit imprimé 312 définissant un bobinage plan. Ce bobinage peut être alternativement disposé sur la surface périphérique interne de la structure annulaire 314, à condition que la série d'aimants permanents 308 soit disposée suivant un cercle de diamètre inférieur de telle manière que les aimants soient situés à l'intérieur de la structure annulaire.

La structure annulaire est fixée au voisinage de la bobine annulaire 305 du stator 304. Dans la configuration présentée, la fixation de la structure annulaire peut être renforcée par un matériau non ferreux 313 interposé entre une portion de la périphérie interne de la structure annulaire et du stator 304.

La figure 6 montre encore une autre variante de réalisation des moyens générateurs de courant dans le dispositif de butée axiale. Sur cette figure, le dispositif de butée 400 comprend un disque 401 incluant une série d'aimants permanents 408 toujours disposés suivant un cercle concentrique à l'axe du disque 401. Toutefois, dans cette réalisation, l'orientation des pôles des aimants est différente des orientations précédemment illustrées. En effet, les pôles sont orientés suivant une direction parallèle à l'axe du disque créant ainsi un champ magnétique ayant des lignes de champ 411 qui s'étendent dans un plan perpendiculaire au disque. Dans ce cas, le dispositif induit 406 doit être également orienté différemment pour générer un courant sous l'influence du flux magnétique créé par le déplacement des aimants 408.

Si le dispositif induit 406 est formé à partir d'un bobinage toroïdal, ce dernier est alors enroulé autour d'un noyau sans fer et se trouve situé dans le stator 404 sans dépasser de la surface du stator située en regard du disque 401. Si les moyens induits 406 sont constitué d'un bobinage plan sur circuit imprimé, ce dernier est placé directement sur la face des moyens 406 qui est parallèle à la surface du disque 401 en regard.

Les trois modes de réalisation qui viennent d'être décrits constituent des exemples montrant seulement une partie des variantes qui peuvent être réalisées dans le cadre de l'invention. D'autres réalisations pourront être envisagées sans difficulté par l'homme du métier.

De plus, le dispositif de butée axiale équipé des moyens générateurs de courant selon l'invention a été décrit en relation avec des machines tournantes non motorisées. Toutefois, compte tenu du faible encombrement et de la préservation des caractéristiques dynamiques de la machine grâce à leur intégration au dispositif de butée, ces moyens peuvent aussi avantageusement être montés dans des machines tournantes motorisées permettant ainsi de disposer d'une alimentation de secours des paliers totalement autonome.

## Revendications

1. Machine tournante comportant un arbre rotatif (2) supporté par des premier et deuxième paliers magnétiques radiaux (5, 6) pilotés en courant par un dispositif de commande (13), ledit arbre rotatif étant équipé d'un dispositif de butée axiale (100) comprenant un rotor formé d'un disque (101) solidaire de l'arbre rotatif (2) et interposé entre des premier et second stators (102, 104) formés annulairement autour de l'arbre rotatif et comprenant chacun au moins une bobine annulaire (103; 105) pilotée en courant par un système d'asservissement de position axiale de l'arbre rotatif, **caractérisée en ce qu'**un des deux stators du dispositif de butée axiale (100) comprend en outre un dispositif induit (106) et **en ce que** le disque (101) solidaire de l'arbre rotatif comprend un dispositif inducteur (107) de manière à créer, lors de la rotation de l'arbre, un courant d'excitation dans l'élément induit afin de fournir de l'énergie aux paliers magnétiques radiaux.

2. Machine tournante selon la revendication 1, **caractérisée en ce que** le dispositif inducteur comprend plusieurs aimants permanents (208, 209; 308; 408) fixés dans la structure du disque (101).

3. Machine tournante selon la revendication 2, **caractérisée en ce que** les aimants permanents (308; 408) sont disposés uniformément dans le disque suivant un cercle de diamètre supérieur, égal ou inférieur à celui du dispositif induit.

4. Machine tournante selon la revendication 2, **caractérisée en ce que** les aimants permanents (208, 209) sont disposés uniformément dans le disque en une première série suivant un cercle de diamètre inférieur à celui du dispositif (206) induit et en une seconde série suivant un second cercle de diamètre supérieur à celui du dispositif induit de sorte que l'espace défini entre la première et la seconde série d'aimants forme un logement (210) pour le dispositif induit.

5. Machine tournante selon l'une quelconque des revendications 1 à 4, **caractérisée en ce que** le dispositif induit (206) comprend au moins un bobinage toroïdal (215) enroulé sur un noyau (216) fixé sur le stator (204) du dispositif de butée axiale (200).

6. Machine tournante selon l'une quelconque des revendications 1 à 4, **caractérisée en ce que** le dispositif induit (306) comprend au moins un bobinage plan (312) sur un circuit imprimé disposé sur une structure annulaire (314) fixée sur le stator (304) du dispositif de butée axiale (300).

7. Machine tournante selon la revendication 6, **caractérisée en ce que** le bobinage plan (312) est disposé sur la face de la structure annulaire (314) qui est en regard du pôle le plus proche des aimants permanents.

8. Machine tournante selon l'une quelconque des revendications 1 à 7, **caractérisée en ce que** le dispositif de commande (13) des paliers magnétiques radiaux est relié au dispositif induit pour recevoir le courant généré dans celui-ci.

9. Machine tournante selon la revendication 1 à 8, **caractérisée en que** le dispositif de commande (13) est fixé sur la machine et comprend un habillage antidéflagrant (14).

10. Machine tournante selon l'une quelconque des revendications 1 à 9, **caractérisée en ce qu'**elle fonctionne dans une zone (20) à atmosphère explosible.

11. Machine tournante selon l'une quelconque des revendications 1 à 10, **caractérisée en ce qu'**elle ne comprend pas de motorisation électrique intégrée.

## Claims

1. A rotary machine comprising a rotary shaft (2) supported by first and second radial magnetic bearings (5, 6) whose current is controlled by a control device (13), said rotary shaft being fitted with an axial thrust device (100) comprising a rotor formed by a disk (101) secured to the rotary shaft (2) and interposed between first and second stators (102, 104) formed annularly around the rotary shaft and each including at least one annular coil (103; 105) whose current is controlled by a system for servo-controlling the axial position of the rotary shaft, **characterised in that** one of the two stators of the axial thrust device (100) further comprises a secondary induction circuit (106), and **in that** the disk (101) secured to the rotary shaft includes a primary induction circuit (107) so that during rotation of the shaft, an excitation current is created in the secondary induction circuit so as to deliver energy to the radial magnetic bearings.

2. A rotary machine according to claim 1, **characterised in that** the primary induction circuit comprises a plurality of permanent magnets (208, 209; 308; 408) fixed in the structure of the disk (101).

3. A rotary machine according to claim 2, **characterised in that** the permanent magnets (308; 408) are disposed uniformly in the disk on a circle of diameter that is greater than, equal to, or less than the diameter of the secondary induction circuit.

4. A rotary machine according to claim 2, **characterised in that** the permanent magnets (208, 209) are disposed uniformly in the disk as a first series on a circle of diameter smaller than the diameter of the secondary induction circuit (206) and in a second series on a second circle of diameter greater than the diameter of the secondary induction circuit, such that the gap defined between the first and second series of magnets forms a housing (210) for the secondary induction circuit.

5. A rotary machine according to any one of claims 1 to 4, **characterised in that** the secondary induction circuit (206) comprises at least one toroidal winding (215) wound on a core (216) fixed to the stator (204) of the axial thrust device (200).

6. A rotary machine according to any one of claims 1 to 4, **characterised in that** the secondary induction circuit (306) comprises at least one plane winding (312) on a printed circuit disposed on an annular structure (314) fixed to the stator (304) of the axial abutment device (300).

7. A rotary machine according to claim 6, **characterised in that** the plane winding (312) is disposed on the face of the annular structure (314) which faces the nearer pole of the permanent magnets.

8. A rotary machine according to any one of claims 1 to 7, **characterised in that** the device (13) for controlling the radial magnetic bearings is connected to the secondary induction circuit in order to receive the current generated therein.

9. A rotary machine according to anyone of claims 1 to 8, **characterised in that** the control device (13) is fixed to the machine and includes an explosion-proof cover (14).

10. A rotary machine according to any one of claims 1 to 9, **characterised in that** it operates in an explosive atmosphere zone (20).

11. A rotary machine according to any one of claims 1 to 10, **characterised in that** it does not have an electric motor integrated therein.

## Patentansprüche

1. Umlaufende Maschine mit einer rotierenden Welle (2), die durch erste und zweite magnetische Radiallager (5, 6) getragen wird, welche durch eine Steuervorrichtung (13) stromgesteuert werden, wobei die rotierende Welle mit einer Axialanschlag-Vorrichtung (100) versehen ist, die einen Rotor aufweist, der von einer mit der rotierenden Welle (2) fest verbundenen Scheibe (101) gebildet und zwischen einem ersten und einem zweiten Stator (102, 104) zwischengeschaltet ist, die ringförmig um die rotierende Welle angeordnet sind und jeweils wenigstens eine ringförmige Spule (103; 105) umfassen, die über ein System zur Regelung der Axialstellung der rotierenden Welle stromgesteuert wird, **dadurch gekennzeichnet, daß** einer der beiden Statoren der Axialanschlag-Vorrichtung (100) ferner ein Sekundärteil (106) umfaßt und daß die mit der rotierenden Welle fest verbundene Scheibe (101) eine Induktionsvorrichtung (107) umfaßt, derart, daß während der Rotation der Welle in dem Sekundärelement ein Erregerstrom erzeugt wird, um den magnetischen Radiallagern Energie zu liefern.

2. Umlaufende Maschine nach Anspruch 1, **dadurch gekennzeichnet, daß** die Induktionsvorrichtung mehrere Permanentmagneten (208, 209; 308; 408) umfaßt, die in der Struktur der Scheibe (101) befestigt sind.

3. Umlaufende Maschine nach Anspruch 2, **dadurch gekennzeichnet, daß** die Permanentmagneten (308; 408) in der Scheibe gleichmäßig entlang eines Kreises angeordnet sind, dessen Durchmesser größer, gleich oder kleiner als derjenige des Sekundärteils ist.

4. Umlaufende Maschine nach Anspruch 2, **dadurch gekennzeichnet, daß** die Permanentmagneten (208, 209) in der Scheibe in einer ersten Reihe entlang eines Kreises, dessen Durchmesser kleiner als derjenige des Sekundärteils (206) ist, und in einer zweiten Reihe entlang eines zweiten Kreises, dessen Durchmesser größer als derjenige des Sekundärteils ist, gleichmäßig angeordnet sind, so daß der zwischen der ersten und der zweiten Reihe von Magneten definierte Raum eine Aufnahme (210) für das Sekundärteil bildet.

5. Umlaufende Maschine nach irgendeinem der Ansprüche 1 bis 4, **dadurch gekennzeichnet, daß** das Sekundärteil (206) wenigstens eine toroidale Wicklung (215) umfaßt, die auf einen Kern (216) gewickelt ist, der an dem Stator (204) der Axialanschlag-Vorrichtung (200) befestigt ist.

6. Umlaufende Maschine nach irgendeinem der Ansprüche 1 bis 4, **dadurch gekennzeichnet, daß** das Sekundärteil (306) wenigstens eine Flachwicklung (312) auf einer gedruckten Schaltung umfaßt, die an einer ringförmigen Struktur (314) angeordnet ist, welche an dem Stator (304) der Axialanschlag-Vorrichtung (300) befestigt ist.

7. Umlaufende Maschine nach Anspruch 6, **dadurch gekennzeichnet, daß** die Flachwicklung (312) an der Seite der ringförmigen Struktur (314) angeordnet ist, welche dem nächstgelegenen Pol der Permanentmagneten gegenüberliegt.

8. Umlaufende Maschine nach irgendeinem der Ansprüche 1 bis 7, **dadurch gekennzeichnet, daß** die Steuervorrichtung (13) der magnetischen Radiallager mit dem Sekundärteil verbunden ist, um den in diesem erzeugten Strom zu erhalten.

9. Umlaufende Maschine nach irgendeinem der Ansprüche1 bis 8, **dadurch gekennzeichnet, daß** die Steuervorrichtung (13) an der Maschine befestigt ist und eine explosionsgeschützte Ummantelung (14) aufweist.

10. Umlaufende Maschine nach irgendeinem der Ansprüche 1 bis 9, **dadurch gekennzeichnet, daß** sie in einem Bereich (20) mit explosibler Atmosphäre arbeitet.

11. Umlaufende Maschine nach irgendeinem der Ansprüche 1 bis 10, **dadurch gekennzeichnet, daß** sie keine integrierte elektrische Motorisierung umfaßt.
